# EUROPÄISCHE PATENTSCHRIFT

(11) **EP 2 591 713 B1**
(45) Veröffentlichungstag und Bekanntmachung des Hinweises auf die Patenterteilung: **01.02.2023**
(21) Anmeldenummer: 13000423.7
(22) Anmeldetag: 29.01.2013
(51) Int. Cl.: A47L 15/42, G01F 23/292

(54) **Haushaltgerät mit Wasserstandssensor**
Household appliance with water level sensor
Appareil ménager avec capteur de niveau d'eau

(43) Veröffentlichungstag der Anmeldung: 15.05.2013
(73) Patentinhaber: V-Zug AG, 6300 Zug (CH)
(72) Erfinder: Schürch, Georg, 8515 Wermatswil (CH)
(74) Vertreter: Sutter, Kurt

(56) Entgegenhaltungen:
- EP-A1- 1 336 369
- EP-A1- 1 935 383
- WO-A1-2007/086744
- WO-A2-2010/109414
- DE-A1- 3 240 048
- FR-A1- 2 617 594
- US-A- 3 808 887

## Beschreibung

### Gebiet der Erfindung

Die Erfindung betrifft ein Haushaltgerät mit mindestens einem Tank zur Aufnahme von Wasser und mit einem Füllstandssensor zur Messung eines Füllstands des Tanks.

### Hintergrund

Verschiedene Arten von Haushaltgeräten besitzen Tanks zur Aufnahme von Wasser, so z.B. Wäscheaufbereitungsvorrichtungen, Dampfgargeräte, etc. Tanks dieser Art können z.B. dazu dienen, Frischwasser, Kondenswasser oder aus zu bearbeitendem Gut extrahiertes Wasser aufzunehmen.

Um den Füllstand solcher Tanks zu detektieren, werden z.B. Schwimmer, kapazitive oder optische System oder dergleichen eingesetzt.

In den Dokumenten EP-1217936-B1, US-2009/0235962, DE-102010038668, DE-112010002873 sind zum Beispiel Füllstandsanzeiger basierend auf optischen Verfahren beschrieben.

DE 32 40 048 A1 zeigt eine Vorrichtung in Waschmaschinen mit Waschmittel-Vorratsbehältern. Jedem der Vorratsbehälter, aus denen Waschmittel bzw. Spülmittel in flüssiger Form gesteuert durch ein Programmsteuerwerk dem Wasch- bzw. Spülwasser zuführbar sind, ist in einem optisch durchlässigen unteren Bereich eine optische Schalteinrichtung mit einer Lichtquelle und einem optoelektrischen Schaltglied zugeordnet; der Auswerteschaltung ist eine Signalgeber-Einrichtung nachgeschaltet.

### Darstellung der Erfindung

Es stellt sich die Aufgabe, ein Haushaltsgerät der eingangs genannten Art bereitzustellen, dass in einfacher Weise eine Füllstandsbestimmung erlaubt.

Diese Aufgabe wird vom Haushaltgerät gemäss Anspruch 1 erfüllt. Demgemäss wird zur Bestimmung des Füllstands ein optischer Sensor verwendet, der ausserhalb des Tanks einer seiner Seitenwände, insbesondere der Rückwand, .d.h. der dem Inneren des Geräts zugewandten Seitenwand, gegenüberliegend angeordnet ist. Der Sensor ist dabei auf einer Höhe angebracht, die zwischen der Oberkante und der Unterkante der Seitenwand liegt. Diese Lösung ist einfach zu realisieren und hat den Vorteil, dass der Tank selbst keine besonderen optischen Elemente aufzuweisen braucht, die mit dem eigentlichen Sensor in einer optischen Achse ausgerichtet sein müssen. Unter "optischen Sensor" ist dabei ein Sensor zu verstehen, der mindestens einen Emitter und einen Empfänger von Lichtwellen aufweist, wobei die Intensität des empfangenen Signals vom Wasserstand in dem Tank abhängt. Die Begriffe "optisch", "Licht" und dergleichen umfassen nicht nur das sichtbare Licht, sondern auch benachbarte Wellenlängenbereiche, insbesondere den infraroten oder IR-Bereich.

Besonders vorteilhaft ist die Verwendung eines solchen optischen Sensors deshalb, weil der Tank mechanisch vom Füllstandssensor derart getrennt ist, dass der Tank ohne den Füllstandssensor aus dem Haushaltgerät entnehmbar ist. Gleichseitig wird die Herstellung des Tanks vereinfacht, da die Transparenz der Seitenwand an der Position des Sensors als einziges wesentliches Designmerkmal bleibt, welches der Tank im Zusammenhang mit der Füllstandsanzeige erfüllen muss.

Der Emitter und der Empfänger sind vorzugsweise so in dem Haushaltsgerät angebracht, dass das vom Emitter emittierte Licht bei eingesetztem Tank möglichst direkt auf die Seitenwand der Tanks trifft. Eine direkte Bestrahlung des Empfängers durch den Emitter wird bevorzugterweise durch eine optische Barriere zwischen beiden Teile verhindert. Dies ist insbesondere dann von Vorteil, wenn beide Bauteile mit geringem Abstand voneinander angeordnet sind.

Der Emitter ist bevorzugt eine im infraroten (IR) Bereich emittierende Strahlungsquelle, z.B. eine IR Licht emittierende Diode (LED). Der Emitter strahlt dabei bevorzugterweise nicht in einen sehr engen, sondern eher in einen grösseren Raumwinkelbereich ab, d.h. in einen Raumwinkel, welcher grösser als 30 Grad ist. Besonders bevorzugt ist für den Strahlungskegel des Emitters ein Raumwinkelbereich im Bereich von 40 bis 60 Grad.

In einer weiteren bevorzugten Variante der Erfindung sind der Emitter und der Empfänger so im Haushaltsgerät angebracht, dass auch zwischen dem am weitesten vorstehenden Bauteil und der Seitenwand des Tanks bei eingesetztem Tank ein Luftspalt von mindestens 1mm, insbesondere mindestens 3mm, vorhanden ist. Die maximale Weite des Luftspalts ist dabei 10mm, vorzugsweise 6mm. Innerhalb eines solchen Spalts können Wassertropfen ablaufen, ohne sich zwischen dem Sensor und der Wand festzusetzen und dadurch die Messergebnisse zu verschlechtern.

Dieser Abstand lässt sich insbesondere durch eine in den Tankinnenraum gewölbte Vertiefung oder Einbuchtung an der Seitenwand des Tanks realisieren. Die Einbuchtung liegt dabei in einem Bereich der Wand, der vom Emitter beleuchtet wird. Der gegenüber dem Rest der Wand zurückversetzte Teil der Einbuchtung ist besser vor Kratzern, Verunreinigungen und anderen Gebrauchsspuren geschützt und kann länger als optisches Fenster dienen.

In einer bevorzugten Ausführungsform sind mehrere Sensoren auf gleichem Höhenniveau angebracht, um Fehlfunktionen durch Tropfenbildung zwischen einem einzelnen Sensor und der Seitenwand des Tanks zu reduzieren. Das Höhenniveau ist zum Beispiel so gewählt, dass die mehreren Sensoren den gleichen, z.B. maximalen, Füllstand messen können.

Weiterhin besitzt der Tank eine Zone erhöhter Reflektivität. Diese Zone kann zum Generieren eines Signals benutzt werden, das die Anwesenheit des Tanks im Gerät oder dessen bestimmungsgemässe Positionierung im Gerät anzeigt.

Die Erfindung ist besonders geeignet zum Einsatz in einem Dampfgargerät, wo der Tank zur Aufnahme des Wassers für den Dampfgenerator dient, oder in einem Wäscheaufbereitungsgerät, wo der Tank für die Aufnahme von aus der Wäsche extrahiertem Wasser oder für Frischwasser zur Wäschebedampfung verwendet wird.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1A einen schematischen vertikalen Schnitt durch einen Teil eines Haushaltgeräts,
Fig. 1B einen schematischen vertikalen Schnitt in einer Ebene senkrecht zum Schnitt von Fig. 1A durch einen Teil eines Haushaltgeräts,
Fig. 1C einen schematischen horizontalen Schnitt durch einen Teil eines Haushaltgeräts,
Fig. 2A und 2B Reflektionen eines Lichtstrahl an einem Tank,
Fig. 2C die relativen Positionen von optischen Emitter und Empfänger für einen Sensor, und
Fig. 3 verschiedene Anordnungen von optischen Emitter und Empfänger mit optischer Abschirmung auf einer Printplatte.

### Wege zur Ausführung der Erfindung

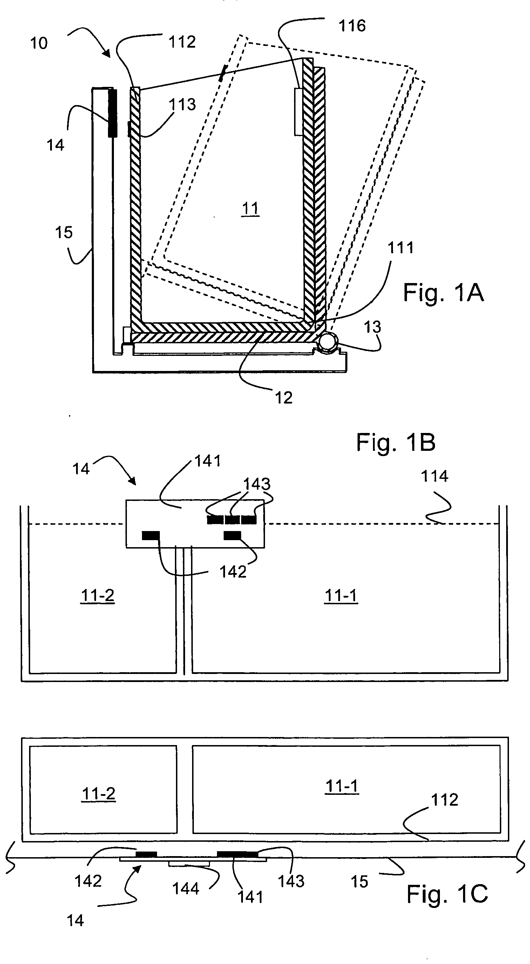

Fig. 1A zeigt einen Schnitt durch ein Haushaltgerät 10 im Bereich eines Tanks 11. Beim Tank 11 handelt es sich um einen Behälter zur Aufnahme von Wasser. Dabei kann es sich z.B. um Wasser handeln, das dem Haushaltgerät 10 zugeführt werden muss, oder um Wasser, welches beim Betrieb des Haushaltgeräts 10 anfällt und aufgefangen werden soll.

Der Begriff Wasser umfasst dabei generell auch wässrige Flüssigkeiten mit einem Anteil an Verbindungen oder Feststoffen, wie sie beim Betrieb von Haushaltsgeräten üblicherweise anfallen, d.h. Reinigungsmitteln, Partikel, Fasern, Kalk, etc.

Der Tank 11 ist so ausgestaltet, dass er als Einheit dem Gerät 10 entnommen werden kann, insbesondere um ihn zu befüllen, zu entleeren oder zu reinigen.

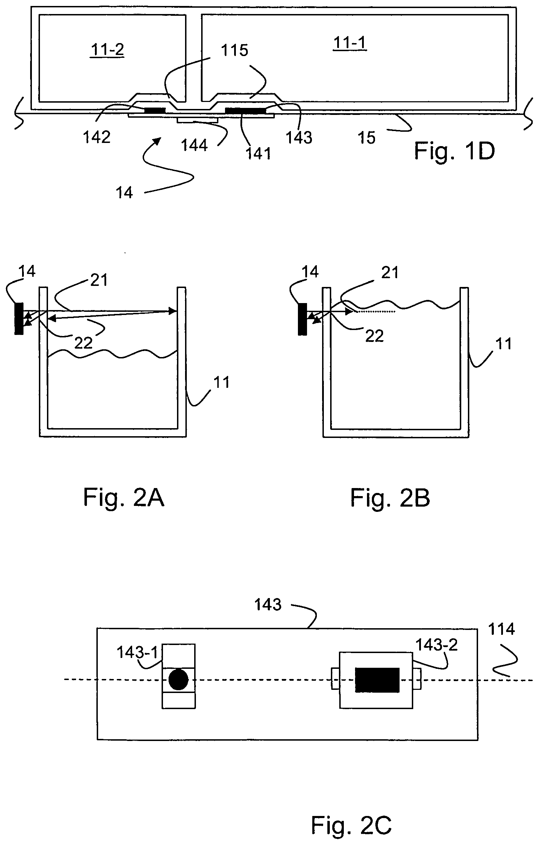

In der dargestellten Ausführung ist der Tank 11 in einer Schwenkhalterung 12 schwenkbar gehalten. In der dargestellten Ausführung bildet die Schwenkhalterung 12 einen Halter für den Tank 11, in welchen dieser eingesetzt werden kann. Die horizontal verlaufende Schwenkachse 13 der Schwenkhalterung 12 befindet sich im Bereich der unteren Kante 111 der Vorderseite des Tanks 11. Die Schwenkhalterung 12 ist zwischen einer ersten Position (in Fig. 1 mit durchgezogenen Linien dargestellt) und einer zweiten Position (gestrichelt dargestellt) um die Schwenkachse 13 schwenkbar. In der ersten Position befindet sich der Tank 11 in seiner betriebsbereiten Position im Gerät 10. In der zweiten Position kann der Tank 11 dem Gerät 10 einfach entnommen werden. Über die Schwenkachse 13 ist die Schwenkhalterung 12 mit dem stationären Teil 15 des Haushaltgeräts verbunden.

In dem gezeigten Beispiel besteht der Tank 11 aus zwei separaten Teilen. In Fig. 1B sind die beiden Teile 11-1, 11-2 des Tanks 11 in einem schematischen vertikalen Schnitt entlang der Rückwand des Tanks 11 dargestellt. Der Tankteil 11-1 dient dabei als ein Auffangbehälter, während der Tankteil 11-2 dazu vorgesehen ist, vom Benutzer bei bestimmten Betriebsmoden des Geräts mit Wasser gefüllt zu werden.

Am stationären Teil 15 des Haushaltgeräts 10 ist der optische Sensor 14 befestigt. Dieser Sensor umfasst auch eine Auswerteelektronik. Diese Anordnung kann, wie gezeigt, z.B. als Printplatte 141 mit einem isolierenden Träger und darauf angeordneten optischen Bauteilen ausgestaltet sein. Der optische Sensor 14 ist in dem gezeigten Beispiel gegenüber der Rückseite 112 des Tanks 11 angebracht. Jedoch ist es auch möglich, den Sensor an einer der linken oder rechten Seitenwand des Tanks 11 gegenüberliegenden Gerätewand zu montieren.

Im der betriebsbereiten Position ist die Rückwand 112 des Tanks 11 durch einen etwa 4mm breiten Spalt von dem optischen Sensor 14 getrennt. Dieser Spalt erleichtert das Ablaufen von Wasser und Wassertropfen, die sich zwischen den Seitenwänden des Tanks und dem Gehäuse des Geräts bilden können.

An der Rückwand des Tanks 11 befindet sich in dem gezeigten Beispiel auch eine Zone 113, die eine gegenüber der restlichen Wand erhöhte Reflektivität für die vom optischen Sensor ausgesendete Lichtstrahlung aufweist.

Wie in Fig. 1B gezeigt, weist der optische Sensor 14 einen rechten und einen linken Teil auf, die jeweils einem der Tankteile 11-1,11-2 zugeordnet sind. Auf der linken Seite weist der Sensor dabei ein optisches Bauteil 142 auf und auf der rechten Seite vier optische Bauteile 142,143. Zwei der gezeigten Bauteile sind optische Positionssensoren 142, die auf der Höhe der Zone erhöhter Reflektivität 113 des Tanks 11 angeordnet sind, um die Anwesenheit und korrekte Position der Tankteile 11-1,11-2 zu überprüfen. Die Gruppe von drei optischen Füllstandssensoren 143 sind alle auf der Höhe eines maximal zulässigen Füllstands des Tankteils 11-1 angeordnet. Dieser maximal zulässige Füllstand ist durch die gestrichelte Linie 114 gekennzeichnet. Beim Tankteil 11-2, der vom Benutzer gefüllt wird, fehlt die Gruppe 143, da bei diesem eine Füllstandsüberwachung entfallen kann.

Eine gleiche Sensoranordnung kann auch dazu verwendet werden, um den minimalen Füllstand im Frischwassertank anzuzeigen. Dafür müssten die Sensoren an einer Position im Gerät angebracht sein, die der Höhe dieses minimalen Füllstands entspricht. Ebenso kann jede andere gewählte Höhe des Füllstands durch die Anbringung eines Sensors auf der jeweiligen Höhe gemessen werden.

Da die drei optischen Füllstandssensoren 143 redundante Messungen durchführen, kann der maximale Füllstand in dem gezeigten Beispiel mit grosser Zuverlässigkeit angezeigt werden. In dem Beispiel wird lediglich das Messergebnis der Mehrheit der optischen Füllstandssensoren 143 als echtes Messergebnis an die Geräteelektronik weitergegeben. Verfälschungen des Messergebnisses, die sich etwa durch Tropfenbildung vor den Sensoren ergeben können, werden durch diese redundanten Messungen unwahrscheinlicher.

Die horizontale Schnittansicht in Fig. 1C zeigt die optischen Bauteile 142, 143 auf der Frontseite der Printplatte 141. Auf der Rückseite der Printplatte 141 sind die Ansteuerungs- und Auswerteelektronikbauteile 144 angebracht, d.h. bis auf einzelne optische Bauteile sind die Elektronikbauteile gegenüber der zum Tank offenen Seite abgeschirmt und geschützt im Gerät 15 angebracht.

In einer Variante der Erfindung kann die dem Sensor gegenüberliegende Seitenwand des Tanks 11 auch in einer Weise ausgestaltet sein, die einen kleineren Abstand von 1mm bis 3mm zwischen dem grössten Teil der Seitenwand und der Gerätewand 15 zulässt, aber dennoch einen grösseren Abstand von 4mm bis 6mm im Bereich des optischen Sensors 14 belässt. Mit dieser Ausgestaltung des Tanks 11 kann zum einen eine gute Passform mit der Schwenkhalterung erreicht und gleichzeitig im Bereich des optischen Sensors 14 eine Abnutzung der Rückwand verhindert werden. Störende Tropfen können im Bereich des Sensors 14 ebenfalls leicht ablaufen.

Im Beispiel der Fig. 1D weist die Rückwand 112 des Tanks dazu eine im Bereich des Sensors 14 in das Tankinnere gerichtete Vertiefung oder Einbuchtung 115 auf. Im Bereich der Einbuchtung 114 ist der Abstand zwischen der Rückwand des Tanks 11 und der Wand 15 des Gerätes 10 bzw. dem Sensor 14 etwa 5mm, während die restliche Rückwand einen kleineren Abstand zur Gerätewand 15 von 2 bis 3 mm aufweist.

Der optische Sensor 14 basiert in den gezeigten Beispielen auf einer Intensitätsmessung der in Emissionsrichtung reflektierten oder gestreuten Strahlung oder einer damit zusammenhängenden Messgrösse. Die Schwankung in der Intensität der reflektierten Strahlung kann vereinfacht anhand der Fig. 2A und 2B erläutert werden. Im Prinzip reflektiert jede Grenzfläche, auf die ein einfallender Lichtstrahl 21 fällt, einen Teil der Strahlung. Die Intensität der reflektierten Strahlung 22 hängt dabei vom Unterschied in den Brechungsindizes der Schichten vor und hinter der Grenzfläche ab. Besteht der Tank 11 aus transparentem, IR-durchlässigem Material wie beispielsweise Polykarbonat oder anderen Kunststoffen, so wird, wie in Fig. 2A gezeigt, bei einem nicht maximal gefüllten Tank Licht an jeder Grenzfläche zwischen der Tankwand und Luft reflektiert.

Ist der Tank 11 dagegen wie in Fig. 2B gezeigt bis zur Höhe der einfallenden Strahlung 21 oder höher mit Wasser gefüllt, wird die Differenz der Brechungsindizes kleiner und weniger Licht wird an der ersten Grenzfläche zwischen Tankwand und Wasser reflektiert. Zugleich absorbiert Wasser die einfallende Strahlung 21 stärker als Luft, so dass praktisch keine Strahlung mehr die in Strahlrichtung hintere (und aus Gerätesicht vordere) Wand des Tanks 11 erreicht und dort reflektiert wird. Insgesamt reduziert sich also die vom Empfänger aufgefangene reflektierte Strahlung 22 deutlich. Messergebnisse zeigen eine Reduktion der reflektierten Lichtintensität um etwa 40 Prozent, wenn der Wasserpegel die Füllstandslinie überschreitet.

Dieser Kontrast in der Intensität kann noch erhöht werden, indem diejenige Seitenwand, welche der Seitenwand gegenüber liegt, durch die die Strahlung einfällt, mit reflektierenden Schichten ausgestattet wird. Eine solche Schicht 116 ist in Fig. 1A angedeutet, wobei sie entweder auf der Innenseite oder der Aussenseite der gegenüberliegenden Seitenwand gebracht sein.

Um den Messbereich für den Übergang zum maximal gefüllten Zustand auf ein möglichst schmales räumliches Band zu begrenzen, sind der Emitter 143-1 und der Empfänger 143-2 bevorzugt nebeneinander angebracht. Die Mittelpunkte der jeweiligen Sensorflächen liegen dabei auf der Höhe des maximal zulässigen Wasserstands 114, wie dies in Fig. 2C dargestellt ist.

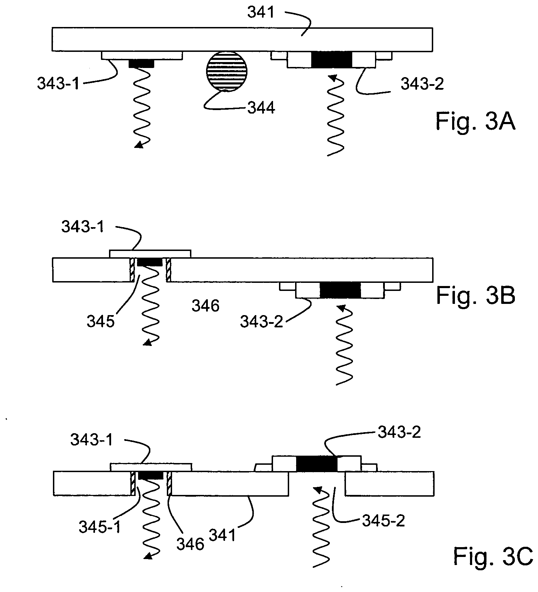

Der Sensor 14 sollte ebenfalls vorzugweise gegen einen optischen Kurzschluss zwischen der Emitterkomponente und der Empfängerkomponente geschützt sein. Wie in den folgenden Figuren 3A-3C dargestellt, lässt sich dies auf unterschiedliche Weisen erreichen.

Sind die optischen Bauteile frontseitig auf die Printplatte 341 montiert, wie in den Figuren 2 und in Fig. 3A dargestellt, kann ein optischer Kurzschluss durch das Anbringen einer Abschirmung zwischen den optischen Komponenten verhindert bzw. verringert werden. Obwohl eine optimierte Abschirmung in Form einer speziell für diesen Zweck ausgeformten Rippe vorteilhaft wäre, kann auch in kostensparender und vereinfachender Weise ein geeignet dimensioniertes elektronisches Bauteil als Abschirmung dienen. In dem Beispiel von Fig. 3A ist der Vorwiderstand 344 der Leuchtdiode 343-1 derart zwischen der Diode 343-1 und dem Photoempfänger 343-2 angebracht, dass zumindest ein Teil der direkten Strahlung zwischen diesen beiden Bauteilen abgeschirmt wird.

Auf eine Abschirmung auf der Printplatte 341, wie in Fig. 3A gezeigt, kann allerdings verzichtet werden, wenn die verwendete Lichtquelle oder der Empfänger bereits mit einer eigenen seitlichen optischen Abschirmung versehen ist. Derartig abgeschirmte LEDs sind kommerziell für den IR Bereich erhältlich. Allerdings bieten solche abgeschirmte optische Bauteile nicht für alle kommerziellen Anwendungen eine wirtschaftliche Alternative.

Wie in Fig. 3B gezeigt, können die optischen Bauteile 343-1,343-2 auch wechselseitig auf der Front- und Rückseite der Printplatte 341 angebracht werden. In dem gezeigten Beispiel ist die LED 343-1 auf der Rückseite verlötet und leuchtet durch eine Öffnung 345 in der Printplatte 341. Bei einer solchen Lösung kann allerdings der Abstrahlwinkel (wie in Fig.3B gezeigt) oder der Empfang von Strahlung räumlich eingeschränkt werden, da die Öffnungen in der Printplatte wie Blenden wirken. Um ferner ein Einkoppeln des Lichts in die Printplatte zu verhindern, kann es notwendig sein, die Öffnung mit einer Abschirmung zu versehen, beispielsweise in Form eines in die Printplatte 341 eingesetzten metallischen Rings 346.

In Fig. 3C sind alle optischen Bauteile 343-1,343-2 auf der Rückseite der Printplatte 341 angebracht. Die Abstrahlung und der Empfang von Strahlung erfolgt durch entsprechende Öffnungen 345-1,345-2 in der Printplatte 341. Um zu verhindern, dass die Printplatte als Lichtleiter zwischen dem Emitter 343-1 und dem Empfänger 343-2 wirkt, sind ebenfalls Abschirmungen 346 vorzusehen. Da viele optische Bauteile nicht für eine rückseitige Montage vorgesehen sind, kann eine solche Anordnung zu einem erhöhten Aufwand bei der Fertigung des Sensors 14 führen.

Als Emitter und Empfänger können bekannte IR LEDs bzw. Photodioden verwendet werden. Vor dem Einbau in das Gerät kann jedes optische Bauteil getestet werden, um eine Homogenität aller im Gerät eingesetzten Bauteile bezüglich Emissionsverhalten und -leistung bzw. in der Empfindlichkeit beim Lichtempfang zu erzielen. Alternativ dazu können die optischen Elemente aus einem weiten Fertigungsspektrum ausgewählt und erst nach dem Einbau in das Gerät kalibriert werden, z.B. durch Messung der reflektierten Intensität bei leerem und/oder vollem Tank. Die so bestimmten Werte für die einzelnen Bauteile können in dem Kontrollsystem des Geräts gespeichert werden und als Basiswerte für die Wasserstandsmessung verwendet werden, um so die verschiedene Leistung der Bauteile auszugleichen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Haushaltgerät mit mindestens einem Tank (11) zur Aufnahme von Wasser und mit einem Füllstandssensor (14) zur Messung eines Füllstands des Tanks (11), wobei der Füllstandssensor (14) ein oder mehrere optischen Bauteile (142,143) enthält mit mindestens einem optischen Emitterelement (143-1,343-1) und mindestem einem optischen Empfängerelement (143-2,343-2), wobei das optische Emitterelement (143-1,343-1) und das optische Empfängerelement (143-2,343-2) im Haushaltsgerät einer transparenten Seitenwand (112) des Tanks (11) im eingesetzten und betriebsbereiten Zustand gegenüberliegend auf einem Niveau (114) unterhalb einer Oberkante des Tanks (11) und oberhalb eines Bodens des Tanks (11) angebracht sind und wobei der Tank (11) mechanisch vom Füllstandssensor (14) derart getrennt ist, dass der Tank (11) ohne den Füllstandssensor (14) aus dem Haushaltgerät entnehmbar ist,
**dadurch gekennzeichnet, dass** das Haushaltsgerät einen optischen Anwesenheitssensor (142) aufweist, welcher dazu ausgestaltet ist, ein Signal abhängig davon zu erzeugen, ob der Tank (11) in das Haushaltsgerät eingesetzt ist und wobei die dem Anwesenheitssensor (142) zugewandte Seitenwand (112) des Tanks (11) eine Zone (113) mit gegenüber der restlichen Wand erhöhter Reflektivität aufweist, und wobei sich im eingesetzten und betriebsbereiten Zustand des Tanks (11) die Zone (113) erhöhter Reflektivität auf der Höhe des Anwesenheitssensors (142) befindet.

2. Haushaltgerät nach Anspruch 1, wobei das optische Emitterelement (143-1,343-1) und das optische Empfängerelement (143-2,343-2) für eine Messung von in entgegen der Emissionsrichtung reflektiertem oder gestreutem Licht angeordnet sind.

3. Haushaltgerät nach einem der vorangehenden Ansprüche, wobei das der Seitenwand (112) nächstliegende optische Bauteil (142,143) des Sensors (14) einen Abstand von 1mm bis 10mm von der dem Sensor zugewandten Seite der Seitenwand (112) des Tanks (11)im eingesetzten und betriebsbereiten Zustand aufweist.

4. Haushaltgerät nach Anspruch 3, wobei die dem Sensor (14) zugewandte Seite der Seitenwand (112) des Tanks (11) eine Einbuchtung (115) zum Inneren des Tanks aufweist.

5. Haushaltgerät nach einem der vorangehenden Ansprüche, wobei das optische Emitterelement eine im infraroten Bereich emittierende Lichtquelle (143-1,343-1) ist.

6. Haushaltgerät nach einem der vorangehenden Ansprüche, wobei das optische Emitterelement eine in einen Raumwinkelbereich von mehr als 30 Grad emittierende Lichtquelle (143-1,343-1) ist.

7. Haushaltgerät nach Anspruch 5 oder 6, wobei das optische Emitterelement eine Infrarot- IR -LED (143-1,343-1) ist.

8. Haushaltgerät nach einem der vorangehenden Ansprüche, wobei das Emitterelement (143-1,343-1) und das Empfängerelement (143-2,343-2) auf gleicher Höhe im Gerät angebracht sind.

9. Haushaltgerät nach Anspruch 8, wobei der optische Sensor (14) mehrere Paare von Emitterelementen (143-1,343-1) und Empfängerelementen (143-2,343-2) umfasst und die Paare auf gleicher Höhe im Gerät angebracht sind.

10. Haushaltgerät nach einem der vorangehenden Ansprüche, wobei zwischen dem Emitterelement (143-1,343-1) und dem Empfängerelement (143-2,343-2) eine optische Barriere angebracht ist.

11. Haushaltgerät nach einem der vorangehenden Ansprüche, wobei das Emitterelement (143-1,343-1) und das Empfängerelement (143-2,343-2) auf einer gemeinsamen Printplatte (141, 341) angebracht sind.

12. Haushaltgerät nach Anspruch 11, wobei das Emitterelement (143-1,343-1) und das Empfängerelement (143-2,343-2) auf der im eingesetzten und betriebsbereiten Zustand dem Tank (11) zugewandten Seite der Printplatte (141,341) angebracht sind.

13. Haushaltgerät nach Anspruch 11, wobei das Emitterelement (143-1,343-1) auf der im eingesetzten und betriebsbereiten Zustand dem Tank (11) abgewandten Seite der Printplatte und das Empfängerelement (143-2,343-2) auf der dem Tank (11) zugewandten Seite der Printplatte (141,341) angebracht sind.

## Claims

1. A household device comprising at least one tank (11) for holding water and a level sensor (14) for measuring a level of the tank (11), the level sensor (14) comprising one or more optical components (142,143) having at least one optical emitter element (143-1,343-1) and at least one optical receiver element (143-2,343-2), wherein the optical emitter element (143-1,343-1) and the optical receiver element (143-2,343-2) are mounted in the household device opposite a transparent side wall (112) of the tank (11) in the inserted and operational state at a level (114) below an upper edge of the tank (11) and above a bottom of the tank (11) and wherein the tank (11) is mechanically separated from the level sensor (14) in such a way that the tank (11) can be removed from the household device without the level sensor (14),
**characterised in that** the household device has an optical presence sensor (142) which is designed to generate a signal depending on whether the tank (11) is inserted into the household device and wherein the side wall (112) of the tank (11) facing the presence sensor (142) has a zone (113) with increased reflectivity compared to the remaining wall, and wherein in the inserted and operational state of the tank (11) the zone (113) of increased reflectivity is located at the level of the presence sensor (142).

2. The household device according to claim 1, wherein the optical emitter element (143-1,343-1) and the optical receiver element (143-2,343-2) are arranged for a measurement of light reflected or scattered in the opposite direction of emission.

3. The household device according to any one of the preceding claims, wherein the optical component (142, 143) of the sensor (14) closest to the side wall (112) is at a distance of 1 mm to 10 mm from the side of the side wall (112) of the tank (11) facing the sensor in the inserted and operational state.

4. The household device according to claim 3, wherein the side of the side wall (112) of the tank (11) facing the sensor (14) has an indentation (115) towards the interior of the tank.

5. The household device according to any one of the preceding claims, wherein the optical emitter element is a light source (143-1,343-1) emitting in the infrared region.

6. The household device according to any one of the preceding claims, wherein the optical emitter element is a light source (143-1,343-1) emitting in a solid angle range of more than 30 degrees.

7. The household device according to claim 5 or 6, wherein the optical emitter element is an infrared IR LED (143-1,343-1) .

8. The household device according to any one of the preceding claims, wherein the emitter element (143-1,343-1) and the receiver element (143-2,343-2) are mounted at the same level in the device.

9. The household device according to claim 8, wherein the optical sensor (14) comprises a plurality of pairs of emitter elements (143-1,343-1) and receiver elements (143-2,343-2), the pairs being mounted at the same height in the device.

10. The household device according to any one of the preceding claims, wherein an optical barrier is provided between the emitter element (143-1,343-1) and the receiver element (143-2,343-2).

11. The household device according to any one of the preceding claims, wherein the emitter element (143-1,343-1) and the receiver element (143-2,343-2) are mounted on a common printed circuit board (141,341).

12. The household device according to claim 11, wherein the emitter element (143-1,343-1) and the receiver element (143-2,343-2) are mounted on the side of the print plate (141,341) facing the tank (11) in the inserted and operational state.

13. The household device according to claim 11, wherein the emitter element (143-1,343-1) is mounted on the side of the print plate facing away from the tank (11) in the inserted and operational state and the receiver element (143-2,343-2) is mounted on the side of the print plate (141,341) facing the tank (11).

## Revendications

1. Appareil ménager avec au moins un réservoir (11) pour recevoir de l'eau et avec un capteur de niveau (14) pour mesurer un niveau de remplissage du réservoir (11), le capteur de niveau (14) contenant un ou plusieurs éléments optiques (142, 143) avec au moins un élément émetteur optique (143-1, 343-1) et au moins un élément récepteur optique (143-2, 343-2), l'élément émetteur optique (143-1, 343-1) et l'élément récepteur optique (143-2, 343-2) étant montés dans l'appareil ménager en face d'une paroi latérale transparente (112) du réservoir (11) à l'état inséré et prêt à fonctionner, à un niveau (114) en dessous d'un bord supérieur du réservoir (11) et au-dessus d'un fond du réservoir (11), et le réservoir (11) étant séparé mécaniquement du capteur de niveau (14) de telle sorte que le réservoir (11) peut être retiré de l'appareil ménager sans le capteur de niveau (14),
**caractérisé en ce que** l'appareil comprend un capteur de présence optique (142) qui est conçu pour générer un signal en fonction du fait si le réservoir (11) est inséré dans l'appareil ménager et dans lequel la paroi latérale (112) du réservoir (11) tournée vers le capteur de présence (142) présente une zone (116) à réflectivité élevée par rapport au reste de la paroi, et dans lequel, lorsque le réservoir (11) est inséré et prêt à fonctionner, la zone (116) à réflectivité élevée se trouve à la hauteur du capteur de présence (142).

2. Appareil ménager selon la revendication 1, dans lequel l'élément émetteur optique (143-1, 343-1) et l'élément récepteur optique (143-2, 343-2) sont disposés pour une mesure de la lumière réfléchie ou diffusée dans le sens opposé au sens d'émission.

3. Appareil ménager selon l'une des revendications précédentes, l'élément optique (142, 143) du capteur (14) le plus proche de la paroi latérale (112) se trouve à une distance de 1 mm à 10 mm du côté de la paroi latérale (112) du réservoir (11) qui est tourné vers le capteur, lorsque l'appareil est en place et prêt à fonctionner.

4. Appareil ménager selon la revendication 3, dans lequel le côté de la paroi latérale (112) du réservoir (11) qui est tourné vers le capteur (14) présente une cavité (115) vers l'intérieur du réservoir.

5. Appareil ménager selon l'une des revendications précédentes, dans lequel l'élément émetteur optique est une source de lumière (143-1, 343-1) émettant dans le domaine infrarouge.

6. Appareil ménager selon l'une des revendications précédentes, dans lequel l'élément émetteur optique est une source de lumière (143-1, 343-1) émettant dans une plage d'angles spatiales supérieure à 30 degrés.

7. Appareil ménager selon la revendication 5 ou 6, dans lequel l'élément émetteur optique est une IR-LED infrarouge (143-1, 343-1).

8. Appareil ménager selon l'une des revendications précédentes, dans lequel l'élément émetteur (143-1, 343-1) et l'élément récepteur (143-2, 343-2) sont montés à la même hauteur dans l'appareil.

9. Appareil ménager selon la revendication 8, dans lequel le capteur optique (14) comprend plusieurs paires d'éléments émetteurs (143-1, 343-1) et d'éléments récepteurs (143-2, 343-2) et les paires sont montées à la même hauteur dans l'appareil.

10. Appareil ménager selon l'une des revendications précédentes, dans lequel une barrière optique est placée entre l'élément émetteur (143-1, 343-1) et l'élément récepteur (143-2, 343-2).

11. Appareil ménager selon l'une des revendications précédentes, dans lequel l'élément émetteur (143-1, 343-1) et l'élément récepteur (143-2, 343-2) sont montés sur une carte de circuit imprimée commune (141, 341).

12. Appareil ménager selon la revendication 11, dans lequel l'élément émetteur (143-1, 343-1) et l'élément récepteur (143-2, 343-2) sont montés sur le côté de la carte de circuit imprimée (141, 341) qui est tourné vers le réservoir (11) lorsque l'appareil est en place et prêt à fonctionner.

13. Appareil ménager selon la revendication 11, dans lequel l'élément émetteur (143-1, 343-1) est monté sur le côté de la carte de circuit imprimée qui est opposé au réservoir (11) à l'état inséré et opérationnel et l'élément récepteur (143-2, 343-2) est monté sur le côté de la carte de circuit imprimée (141, 341) qui est tourné vers le réservoir (11).
